# EUROPÄISCHE PATENTANMELDUNG

(11) **EP 1 767 971 A1**
(43) Veröffentlichungstag der Anmeldung: **28.03.2007**
(21) Anmeldenummer: 06020003.7
(22) Anmeldetag: 25.09.2006
(51) Int. Cl.: G02B 6/38

(54) **Einfach herzustellender Stecker für Lichtwellenleiter**

(30) Priorität: 26.09.2005 DE 102005045943
(71) Anmelder: Rako Electronic Data Technology GmbH, 67269 Grünstadt (DE)
(72) Erfinder: Grässer, Edmond, 67269 Grünstadt (DE)
(74) Vertreter: Mierswa, Klaus

(57) **Zusammenfassung**

Es wird ein Stecker (1, 1', 1") für Lichtwellenleiter beschrieben, der ein Steckeraußengehäuse (4, 4', 4"), ein darin angeordnetes Innengehäuse (2, 2', 2"), sowie darin angeordnete, jeweils ein mit einem Lichtwellenleiter verbundendes Ferrul (17, 17', 17") aufnehmende und teilweise an einer Stirnseite des Steckers aus diesem herausragende Ferruleinzelgehäuse (3, 3', 3") umfasst, und welcher ein die Forruleinzelgehäuse (3, 3', 3") von höchstens drei Seiten umschließendes, eine an einer Längsseite (5) offene Halbschale (6, 6', 6") umfassendes Innengehäuse (2, 2', 2"), sowie ein im Wesentlichen einen in seinem Innenquerschnitt an den Außenquerschnitt des Innengehäuses (2, 2', 2") mit den darin angeordneten Ferruleinzelgehäusen (3, 3', 3") angepassten, an seinen Stirnseiten (7, 8) offenen Rohrabschnitt 9, 9', 9") umfassendes Steckeraußengehäuse (4, 4', 4") aufweist.

## Beschreibung

Technisches Gebiet: Die Erfindung betrifft einen Stecker für Lichtwellenleiter, umfassend ein Steckeraußengehäuse, ein in dem Steckeraußengehäuse angeordnetes Innengehäuse, sowie in dem Innengehäuse angeordnete Ferruleinzelgehäuse, welche jeweils ein mit einem Lichtwellenleiter verbundendes Ferrul haltern und welche teilweise an einer Stirnseite des Steckers aus diesem herausragen, wobei die Ferrule mittels je einer Ferrulaufhängung im Innengehäuse gehaltert sind, gemäß dem Oberbegriff des Anspruchs 1.

### Stand der Technik:

In Computeranlagen und Rechenzentren, in Computer- und Telefonnetzwerken und in automatisierten Fertigungsanlagen ist es bekannt, Daten optisch zu übertragen. Zur optischen Datenübertragung werden typischerweise Lichtwellenleiter verwendet, welche an ihren Enden mit Steckern bzw. Buchsen versehen sind, um lösbar mit den Komponenten der Computeranlage, des Computernetzwerks, oder der automatisierten Fertigungsanlage verbunden werden zu können. Die Lichtwellenleiter können dabei als einzelne optische Leiter, oder gebündelt in Form von beispielsweise runden oder flachen, zwei- oder mehradrigen Lichtleiterkabeln, wie beispielsweise Glasfaserkabeln, ausgeführt sein.

Ein Lichtwellenleiter verfügt üblicherweise über einen für die optische Übertragung zur Verfügung stehenden Querschnitt, der kleiner als 1 mm² ist, wobei nur ein Teil des Querschnittes tatsächlich für die Signalübertragung benutzt werden kann. Um ein optisches Signal von dem einen Lichtwellenleiter in einen anderen Lichtwellenleiter zuverlässig einzukoppeln, muss eine bestimmte Überdeckung der beiden in der Kupplung bzw. Doppelkupplung sich gegenüberliegend angeordneten Lichtwellenleiter erreicht werden.

Dazu sind in den Steckern und den zugehörigen Buchsen, bei optischen Steckverbindungen Receptakle genannt, an den Enden der Lichtwellenleiter üblicherweise jeweils Ferrule, vorzugsweise aus einem keramischen Werkstoff bestehend, angeordnet, welche vom Lichtwellenleiter durchsetzt sind und welche an ihrem Ende, in welchem der Lichtwellenleiter endet, je nach Art der Steckverbindung plan oder konvex oder schräg unter einem bestimmten Winkel ausgebildet sind, um ein möglichst verlustfreies und gegen Streulicht unempfindliches, stirnseitiges Einkoppeln von Licht aus dem einen Ferrul in das in dem anderen Stecker oder der anderen Buchse gegenüberliegenden, um 180° gegenüber dem ersten verdreht angeordneten Ferrul zu gewährleisten. Die Ferrule dienen dabei dem Schutz der Enden der Lichtwellenleiter zur Halterung sowie gegen Beschädigungen und Verschleiß und dienen im Bereich der Steckverbindung zur einfacheren, jedoch hoch präzisen Führung der Lichtwellenleiter. Deshalb ist für eine zuverlässige Datenübertragung durch Lichtwellen eine sehr präzise Anordnung der Ferrule in einer derartigen Steckverbindung erforderlich, weshalb auch die Steckverbindung präzise ausgeführt und gearbeitet sein muss.

Ein Stecker für Lichtwellenleiter umfasst hierzu im Wesentlichen einen oder mehrere, jeweils mit einem Lichtwellenleiter verbundene Ferrule, welche jeweils in einem Ferruleinzelgehäuse angeordnet sind, ein die Ferruleinzelgehäuse aufnehmendes Innengehäuse, sowie ein das Ferrulträgergehäuse umschließendes Steckeraußengehäuse, welches darüber hinaus in der Regel eine Zugentlastung für das nach außen führende Lichtleiterkabel aufweist.

Je nach Ausführung des Steckers können die Ferrule einzeln oder gruppenweise in Längsrichtung des Steckers federbelastet verschiebbar angeordnet sein. Dazu sind entweder die Ferrule, die Ferruleinzelgehäuse oder das Innengehäuse in Axialrichtung der Ferrule bzw. des Steckers gegen eine Federbelastung verschiebbar.

Aus DE 199 00 781 C2 ist ein Stecker für einen Lichtwellenleiter bekannt, der ein Steckeraußengehäuse aufweist, an dessen einem Ende ein Lichtleiterkabel eingeführt ist und am gegenüberliegenden Ende Ferrule austreten, die jeweils in einem ersten inneren Ferruleinzelgehäuse gekapselt sind, welches auf seinen Gehäuseaußenseiten Verriegelungsmittel trägt, die jeweils mit einem Verriegelungsgegenelement einer Steckergegenkupplung zusammenwirken. Die inneren Ferruleinzelgehäuse sind jeweils in einem äußeren Ferruleinzelgehäuse eingefangen, und innerhalb diesem in ihrer Axialrichtung relativ bewegbar. Die inneren Ferruleinzelgehäuse sind in dem Steckergehäuse bewegungsgekoppelt aufgenommen und verfügen über Mittel, mit denen die Verriegelung zwischen dem inneren Ferruleinzelgehäuse und dem Verriegelungsgegenelement der Steckergegenkupplung durch Axialverschiebung des äußeren Ferruleinzelgehäuses gegen das innere Ferruleinzelgehäuse in Richtung Kabeleinführende lösbar ist. Zwischen Lichtleiterkabel und innerem Ferruleinzelgehäuse ist eine bewegungsgekoppelte Verbindung ausgebildet. Dabei ist zur bewegungsgekoppelten Verbindung zwischen Lichtleiterkabel und innerem Ferruleinzelgehäuse ein Steckerinnengehäuse in dem Steckeraußengehäuse angeordnet, in welchem das Lichtleiterkabel einerseits und die Ferrule andererseits formschlüssig gefasst sind und welches im Steckeraußengehäuse in Axialrichtung relativ verschiebbar angeordnet ist, so dass die Bewegungskupplung zwischen Lichtleiterkabel und innerem Ferruleinzelgehäuse eine formschlüssige Verbindung ist. Sowohl das Steckeraußengehäuse als auch das Steckerinnengehäuse bestehen dabei jeweils aus einer unteren und einer oberen Halbschale, wobei zunächst die in dem jeweiligen Gehäuse aufzunehmenden Teile in der unteren Halbschale angeordnet werden, bevor das jeweilige Gehäuse durch Aufsetzen der mit der unteren Halbschale korrespondierenden oberen Halbschale geschlossen wird, um dadurch die innerhalb des jeweiligen Gehäuses angeordneten Teile zu fixieren.

Aus der EP 1 450 186 A2 ist ein Miniatur-Mehrfachstecker für Lichtwellenleiter bekannt geworden, der ein Steckeraußengehäuse mit einem kreisförmigen Loch zur Durchführung einer Zugentlastung und eines Lichtleiterkabels mit rundem Querschnitt und mindestens zwei im Kabelinneren geführten Lichtwellenleitern aufweist. Entsprechend der Anzahl der in dem Lichtleiterkabel verlaufenden Lichtwellenleiter sind mindestens zwei Ferruleinzelgehäuse in dem Steckeraußengehäuse arretiert, welche mit je einem Endbereich aus dem Steckeraußengehäuse ragen. In jedem Ferruleinzelgehäuse ist ein längsverschiebbares Ferrul aufgenommen. Jedes Ferruleinzelgehäuse weist an seinem aus dem Steckeraußengehäuse ragenden Endbereich eine einseitig an demselben befestigte Rastfeder auf, welche mit ihrem freien Ende schräg absteht und zur lösbaren Verrastung des Miniatur-Mehrfachsteckers mit einer Buchse oder Kupplung dient. Eine Schwinge steht von dem Steckeraußengehäuse schräg in Richtung der Rastfedern ab und überragt diese so, dass eine Druckkraft auf die Schwinge ausübbar ist, welche diese schwenkt und dadurch die Rastfedern aus ihrer Verrastung löst. Im Steckeraußengehäuse befindet sich zwischen der Zugentlastung und den Ferruleinzelgehäusen ein Zwischenraum, der so bemessen ist, dass die Krümmung der Lichtwellenleiter bei einer Längsverschiebung der Ferrule einen minimal zulässigen Krümmungsradius nicht unterschreitet. Bei diesem Miniatur-Mehrfachstecker besteht das Steckeraußengehäuse aus einer oberen und einer unteren Halbschale, wobei zunächst die Ferruleinzelgehäuse in die untere Halbschale eingelegt werden müssen, bevor das Steckeraußengehäuse durch Aufsetzen der mit der unteren Halbschale korrespondierenden oberen Halbschale geschlossen wird. Die in dem Steckeraußengehäuse angeordneten Ferruleinzelgehäuse werden hierbei erst durch das Schließen des Steckergehäuses in diesem fixiert.

Durch die DE 10150245A1 ist des Weiteren eine EMI-Abschirmungsvorrichtung für einen Lichtwellenieiter-Transceiver mit Toleranzausgleich in einer FOT-Verbindungsvorrichtung bekannt geworden, die so ausgebildet ist, dass sie in einen Hohlraum eines Gehäuses der Verbindungsvorrichtung eingeschoben und gehalten werden kann, wobei sich ein Schnittstellenteil der FOT in Ausrichtung mit und in einem gewünschten Abstand zu einem Lichtwellenleiter, der mit ihr in einem Gehäuse gekoppelt ist, befindet. Hierzu ist ein Metallgehäuse vorhanden, das sich dem Äußeren der FOT anpasst, so dass eine Oberfläche der FOT, die mit der FOT-Schnittstelle in Verbindung steht, sich mit einem ersten Wandteil des Gehäuses in Kontakt befindet, wobei das Gehäuse weiter ein Federelement auf einer äußeren Oberfläche aufweist, und das Federelement so ausgebildet ist, dass es in Teile des Hohlraums, für den die FOT gestaltet ist, eingreift und den ersten Wandteil des Gehäuses gegen eine Oberfläche des FOT- Hohlraums drückt, so dass die FOT-Schnittstelle sich in der gewünschten Distanz vom Lichtwellenleiter befindet, und die FOT-Schnittstelle in der gewünschten Distanz unter der Spannung der Feder gehalten wird. Dabei kann das Federelement aus einem erhabenen, flexiblen Teil des Metallgehäuses bestehen.

Nachteilig an den bekannten optischen Steckern ist, dass die Herstellung der aus jeweils mehreren Halbschalen zusammengesetzten Steckeraußengehäuse sowie der teilweise in den Steckeraußengehäusen angeordneten, ebenfalls aus mehreren Halbschalen zusammengesetzten Innengehäusen sehr aufwändig und teuer ist, da die einzelnen, miteinander korrespondierenden Halbschalen sehr präzise gefertigt werden müssen, um die Ferrule beziehungsweise die Ferruleinzelgehäuse präzise aufnehmen und fixieren zu können. Zusätzlich bedeutet die Verwendung derart vieler unterschiedlicher Einzelteile einen großen Aufwand bei der Anpassung eines Steckers an unterschiedliche Einbausituationen, da für jedes Teil eine eigene, neue Form, wie etwa eine Spritzgussform hergestellt werden muss. Darüber hinaus ist es sehr aufwändig und kostspielig, Stecker, die aus derart vielen Einzelteilen zusammengesetzt sind zu miniatuisieren.

### Technische Aufgabe der Erfindung:

Der Erfindung liegt die Aufgabe zugrunde, einen optischen Stecker zu entwickeln, der in möglichst wenigen Arbeitsschritten möglichst einfach herstellbar und zusammenbaubar ist.

### Offenbarung der Erfindung und deren Vorteile:

Die Aufgabe wird bei einem Stecker für Lichtwellenleiter der eingangs genannten Gattung dadurch gelöst, dass
a) das Innengehäuse als an einer Längsseite wenigstens teilweise offene Halbschale ausgebildet ist, welche die Ferruteinzelgehäuse bzw. die Ferrulaufhängungen von höchstens drei Seiten umschließt,
b) das Steckeraußengehäuse bezüglich seines Innenquerschnitts an den Außenquerschnitt des Innengehäuses angepasst ist und als Rohrabschnitt ausgeführt ist, welcher an seinen Stirnseiten offen ist,
c) das Innengehäuses ist in das Steckeraußengehäuse zur Aufnahme innerhalb desselben einschiebbar.

Der erfindungsgemäße Stecker weist gegenüber dem Stand der Technik den Vorteil auf, dass er durch die nur geringe Anzahl von Einzelteilen sehr einfach und kostengünstig herstellbar ist. Darüber hinaus sind die Einzelteile selbst sehr einfach und kostengünstig herstellbar, insbesondere da bei dem Innengehäuse und bei dem Steckeraußengehäuse auf eine aus mehreren Halbschalen zusammengesetzte Konstruktion erfindungsgemäß verzichtet wird. Das Steckeraußengehäuse kann, da es sich um einen einfachen Rohrabschnitt handelt, sehr einfach und kostengünstig beispielsweise durch Strangpressen hergestellt werden.

Somit ist das Innengehäuse durch eine offene Halbschale gebildet, welche die Ferruleinzelgehäuse von höchstens drei Seiten umschließt und wenigstens an einer Längsseite offen ist, so dass von dieser offenen Längsseite her die Ferruleinzelgehäuse in die Halbschale eingelegt werden können. Diese Halbschale mitsamt den Ferruleinzelgehäuse kann danach in den an seinen Stirnseiten offenen Rohrabschnitt eingeschoben werden, welcher somit ein Steckeraußengehäuse bildet, in welches das Innengehäuse von einer Stirnseite her einschiebbar ist, so dass das Steckeraußengehäuse die Ferruleinzelgehäuse in dem Innengehäuse fixiert.

Grundsätzlich ist dabei jeder Außenquerschnitt für das Innengehäuse und den Innenquerschnitt des Steckeraußengehäuses denkbar. Bevorzugt wird jedoch eine rechteckige oder quadratische Querschnittsform, da diese einfach herstellbar ist. Dabei ist es ebenso möglich, dass das Innengehäuse und/oder das Steckeraußengehäuse einteilig ausgeführt ist.

Darüber hinaus sind an dem Innengehäuse und/oder an dem Steckeraußengehäuse vorzugsweise Mittel zur Verriegelung des Innengehäuses mit dem Steckeraußengehäuse angeordnet. In weiterer Ausgestaltung der Erfindung können an den Ferruleinzelgehäusen und/oder an dem Steckeraußengehäuse Mittel zur Verriegelung der Ferruleinzelgehäuse mit dem Steckeraußengehäuse angeordnet sein, wobei durch die Verriegelung der Ferruleinzelgehäuse mit dem Steckeraußengehäuse das Innengehäuse gegenüber dem Steckeraußengehäuse fixiert wird. Die Mittel zur Verriegelung können beispielsweise mindestens eine Rastfeder und mindestens ein mit der Rastfeder korrespondierendes, an dem jeweils anderen Teil des Steckers angeordnetes Rastfenster umfassen. Vorzugsweise ist die Rastfeder an dem Innengehäuse beziehungsweise an dem Ferruleinzelgehäuse angeordnet und das korrespondierende Rastfenster an dem Steckeraußengehäuse. Hierdurch kann das als Rohrabschnitt ausgeführte Steckeraußengehäuse einfacher hergestellt werden.

In weiterer Ausgestaltung der Erfindung können die Mittel zur Verriegelung mindestens einen Anschlag umfassen, welcher beim Einschieben des Innengehäuses in das Steckeraußengehäuses die Verschiebbarkeit des Innengehäuses gegenüber dem Steckeraußengehäuse beschränkt. Der Anschlag kann beispielsweise eine lokale Verkleinerung des Innenquerschnitts des Steckeraußengehäuses umfassen und somit durch eine lokale Verkleinerung des Innenquerschnitts des Steckeraußengehäuses gebildet sein. Stößt das Innengehäuse beim Einschieben in das Außengehäuse gegen diesen Anschlag, greifen beispielsweise die an dem Innengehäuse oder an den Ferruleinzelgehäusen angeordneten Rastfedern in die Rastfenster am Steckeraußengehäuse. Vorzugsweise bildet der Stecker dann eine nicht zerstörungsfrei wieder trennbare Einheit.

Eine weitere vorteilhafte Ausgestaltung der Erfindung sieht vor, dass die Ferrule innerhalb der Ferruleinzelgehäuse axial verschiebbar angeordnet sind.

Eine weitere vorteilhafte Ausgestaltung der Erfindung ist gekennzeichnet durch eine in der das Innengehäuse bildenden Halbschale angeordnete Zugentlastung für ein von einem von den Ferruleinzelgehäusen und den Ferrulen abgewandten Kabeleinführende des Steckers in das Steckeraußengehäuse geführtes Lichtleiterkabel. Dabei kann die Zugentlastung integraler Bestandteil des Innengehäuses sein, oder ein in die das Innengehäuse bildende Halbschale von deren offenen Längsseite her einsetzbares Teil umfassen, welches durch das stirnseitige Einschieben des Innengehäuses in das Steckeraußengehäuse fixiert wird.

Vorzugsweise ist zwischen der Zugentlastung und den Ferruleinzelgehäusen ein Zwischenraum angeordnet, in dem das Lichtleiterkabel in seine einzelnen Lichtwellenleiter aufgespaltet wird, wobei der Zwischenraum so bemessen ist, dass die Krümmung der Lichtwellenleiter bei einer Längsverschiebung der Ferrule einen minimal zulässigen Krümmungsradius nicht unterschreitet. Somit ist in dem Zwischenraum innerhalb des Innengehäuses das Lichtleiterkabel in die einzelnen Lichtwellenleiter aufgespalten, welche in diesem Zwischenraum nicht parallel verlaufen.

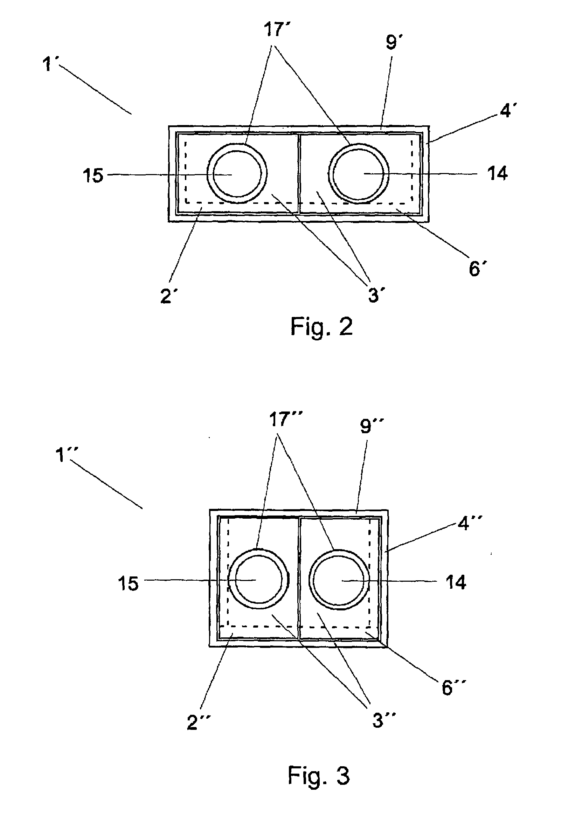

Eine besonders vorteilhafte Ausgestaltung der Erfindung sieht vor, dass die Ferruleinzelgehäuse einen rechteckigen Querschnitt aufweisen und in zwei um 90° um die Längsachse der Ferrule verdrehten Positionen wahlweise in zwei verschiedenen, wiederum in verschiedenen Steckeraußengehäusen anordbaren Innengehäusen anordbar sind, so dass mit nur geringfügigem Aufwand zwei an unterschiedliche räumliche Einbaubedingungen angepasste Stecker herstellbar sind, einen eher breiten und flachen, und einen eher hohen und schmalen. Somit weisen die Ferruleinzelgehäuse einen rechteckigen Querschnitt auf und sind in zwei um 90° um die Längsachse der Ferrule verdrehten Positionen, nämlich entweder mit einer ihrer schmalen Seitenfläche (Figur 2) oder einer ihrer breiten Seitenfläche (Figur 3), wahlweise je in zwei verschiedenen Innengehäusen anordbar, denen jeweils unterschiedliche Steckeraußengehäuse zugeordnet sind.

Die Verwendung rechteckiger Ferruleinzelgehäuse erlaubt eine hohe Standardisierung der Bauteile bei gleichzeitig sehr variabler Ausgestaltungsmöglichkeit der Stecker. Um zwei an unterschiedliche räumliche Einbaubedingungen angepasste Stecker herzustellen sind nur zwei unterschiedliche Bauteile, die das Innengehäuse bildende Halbschale und der das Steckeraußengehäuse bildende Rohrabschnitt nötig. Alle anderen Teile können gleich bleiben. Die Ferruleinzelgehäuse sind zur Erzeugung des rechteckigen Querschnitts vorzugsweise nicht in einer Richtung erhöht, sondern in der anderen Richtung verschmälert. Die verbleibende Erhöhung in der einen Richtung ist dabei notwendig, um bei gleich bleibenden Abmessungen der Ferrule eine Hintergreifung an den Ferruleinzelgehäusen anordnen zu können, welche mit entsprechenden Vorsprüngen an dem Innengehäuse korrespondieren.

Eine andere besonders vorteilhafte Ausgestaltung der Erfindung sieht vor, dass die in das Innengehäuse eingesetzten Ferruleinzelgehäuse einander berühren. Dadurch wird eine weitere Miniaturisierung einer mittels derartiger Stecker hergestellten Steckverbindung möglich. Der Verzicht auf einen Abstand zwischen den Ferruleinzelgehäusen ist insbesondere deshalb möglich, da derartige Steckverbindungen nur sehr selten gelöst werden, so dass nicht unbedingt ein die Ferruleinzelgehäuse stabilisierender Steg auf der Receptakleseite zwischen benachbarten Ferruleinzelgehäusen notwendig ist.

In einer weiteren erfindungsgemäßen Ausgestaltung ist das Innengehäuse ein Spritzgussteil. Das Steckeraußengehäuse kann ein stranggepresstes Teil oder auch ein Spritzgussteil sein.

In weiterer Ausgestaltung des erfindungsgemäßen Steckers weisen die Seitenwandungen der Halbschale, von innerhalb des Zwischenraumes der Halbschale betrachtet, die Höhe des Ferruleinzelgehäuse auf. An die Seitenwandungen der Halbschale schließt sich in Richtung der die Durchführung einer Zugentlastung aufnehmenden Stirnseite je eine Schrägfläche an, welche in die Stirnseite übergehen.

In weiterer Ausgestaltung des erfindungsgemäßen Steckers können die Ferruleinzelgehäuse vollständig oder fast vollständig bzw. wenigstens teilweise aus der Stirnfläche der Halbschale hervorragen, wobei die Ferrulaufhängungen von drei Seiten von der Halbschale umschlossen sind.

In weiterer Ausgestaltung des erfindungsgemäßen Steckers können die Ferrule die Halbschale vollständig oder fast vollständig nach außen in axialer Richtung des Steckers überragen, wobei die Ferruleinzelgehäuse über die Ferrulaufhängungen mit dem Innengehäuse formschlüssig verbunden sind.

In weiterer Ausgestaltung des erfindungsgemäßen Steckers können sowohl das Innengehäuse wie auch das Steckeraußengehäuse einen rechteckförmigen Querschnitt aufweisen, wie Innengehäuse und Steckeraußengehäuse auch jeweils einen rechteckförmigen Grundriss besitzen. Das Steckeraußengehäuse kann als hohler Quader mit ebenfalls bei allen Seiten gleicher Wandstärke ausgebildet sein.

In weiterer und höchst erfindungsgemäßer Ausgestaltung des erfindungsgemäßen Steckers weisen das Innengehäuse und das Steckeraußengehäuse gegenseitig eine hohe Passgenauigkeit mit geringem Spiel auf, um eine hohe Passgenauigkeit der Ferrule des Steckers zu gewährleisten.

Kurzbeschreibung der Zeichnung, in der zeigen:
- Figur 1: eine perspektivische Darstellung eines erfindungsgemäßen Steckers für Lichtwellenleiter in teilweise explodierter Ansicht, mit voneinander beabstandet angeordneten Ferruleinzelgehäusen,
- Figur 2: eine Vorderansicht eines eher flachen erfindungsgemäßen Steckers für Lichtwellenleiter mit liegend angeordneten, einander berührenden, im Querschnitt rechteckigen Ferruleinzelgehäusen,
- Figur 3: eine Vorderansicht eines eher hohen erfindungsgemäßen Steckers für Lichtwellenleiter mit stehend angeordneten, einander berührenden, im Querschnitt ebenfalls rechteckigen Ferruleinzelgehäusen
- Figur 4: eine Draufsicht auf die das Innengehäuse bildende Halbschale gemäß der Figur 1 sowie

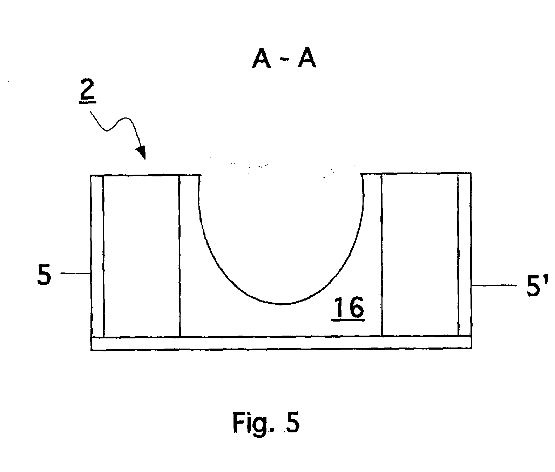

- Figur 5: einen Querschnitt durch das Innengehäuse der Figur 1 längs der Linie A-A.

### Wege zur Ausführung der Erfindung:

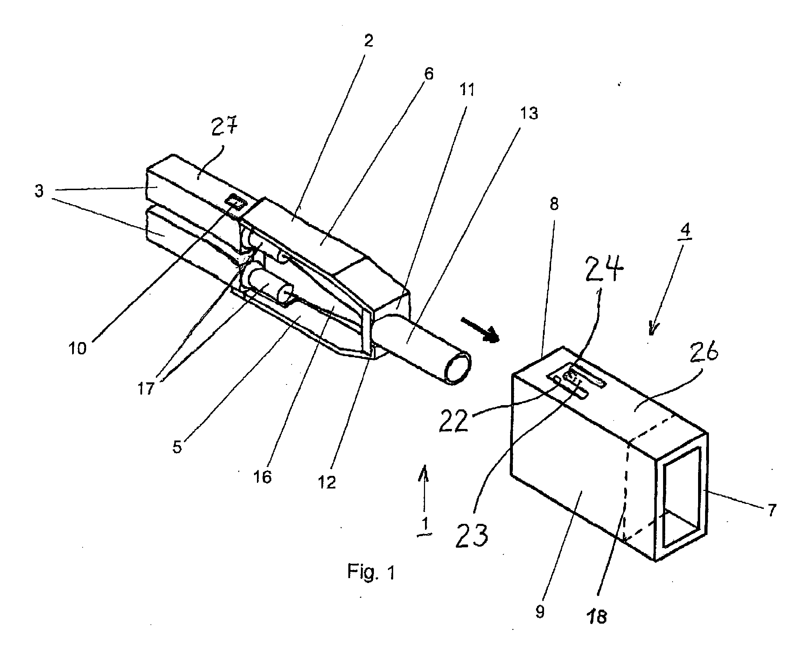

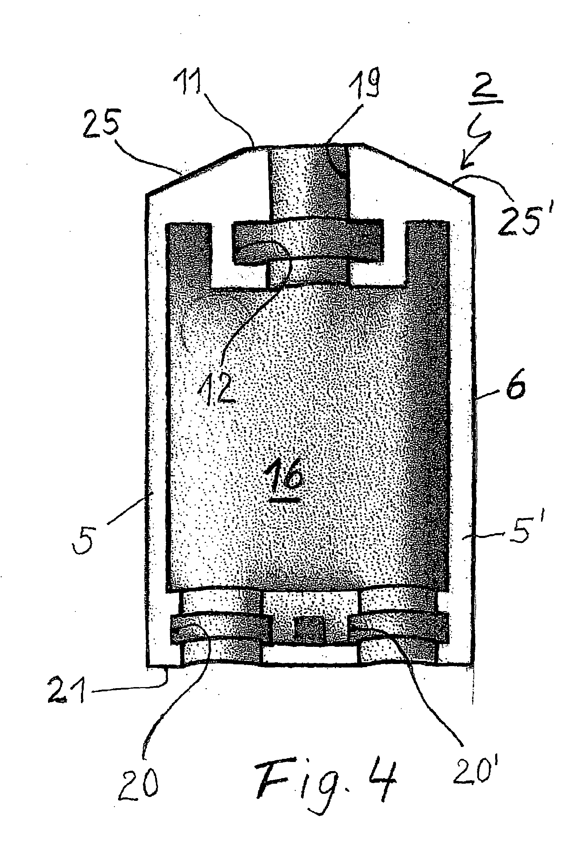

Ein in Figur 1 dargestellter erfindungsgemäßer Stecker 1 für Lichtwellenleiter besteht im Wesentlichen aus zwei Ferruleinzelgehäusen 3, einem die Ferruleinzelgehäuse 3 aufnehmenden Innengehäuse 2, siehe auch Figur 4, in welches die Ferruleinzelgehäuse eingelegt sind, sowie einem Steckeraußengehäuse 4. Sowohl das Innengehäuse 2 wie auch das Steckeraußengehäuse 4 weisen einen rechteckförmigen Querschnitt auf, wie sie auch jeweils einen rechteckförmigen Grundriss besitzen. Das Innengehäuse 2 besteht im Wesentlichen aus einer sowohl an einer Stirnseite 21 als auch an einer Längsseite 5, 5', die hier eine flächenmäßig größte Breitseite ist, offenen bzw. wenigstens teilweise offenen Halbschale 6. Die Halbschale 6 ist somit gemäß der Figur 4 vorzugsweise durch eine Bodenfläche oder größte Breitseite, zwei planparallel zueinander verlaufende Längsseiten 5, 5', eine obere Stirnfläche 11 mit einer Durchführung 19 und eine untere Stirnfläche 21 mit zwei nach außen hin offenen Ausnehmungen 20, 20' begrenzt. An die obere Stirnfläche 11 schließen sich beidseitig Schrägflächen 25, 25' an, welche an den Längsseiten 5, 5' enden. Die Wandstärke der Wandungen der Halbschale ist vorzugsweise für alle Wandungen gleich; die Vertiefungen der Halbschale sind in Figur 2 und 3 punktiert dargestellt.

Innerhalb der Ferruleinzelgehäuse 3, welche vorzugsweise einen rechteckigen Querschnitt aufweisen, aber auch mit quadratischem Querschnitt ausgeführt sein können, sind Ferrule 14, 15, Figuren 2 und 3, angeordnet, welche in Ferrulaufhängungen 17 mit Crimphülsen gehaltert sind. Die Ferruleinzelgehäuse 3 sind mittels ihrer Ferrulaufhängungen 17 in die vertieften Ausnehmungen 20, 20' der Halbschale 6 gelegt, welche sich in der Stirnfläche 21 derselben befinden. In jedem der Ferruleinzelgehäuse 3 ist jeweils das mit einem Lichtwellenleiter verbundene Ferrul, Figuren 2 und 3, mit Ferrulaufhängung 17 mit Crimphülse gegen eine Federbelastung axial verschiebbar angeordnet. Die Ferruleinzelgehäuse 3 ragen fast vollständig aus der Stirnfläche 21 der Halbschale 6 hervor, wie es der Figur 1 zu entnehmen ist. Die Ferrulaufhängungen 17 sind somit von drei Seiten von der Halbschale 6 umschlossen. Die Ferrule 3 können die Halbschale 6, das Innengehäuse 2, vollständig oder fast vollständig nach außen in axialer Richtung des Steckers 1 überragen. Die Ferruleinzelgehäuse 3 sind somit über die Ferrulaufhängungen 17 mit dem Innengehäuse 2 formschlüssig verbunden.

Das Steckeraußengehäuse 4 ist als hohler Quader mit vorzugsweise ebenfalls bei allen Seiten gleicher Wandstärke ausgebildet. Das Steckeraußengehäuse 4 besteht im Wesentlichen aus einem in seinem lichten Innenquerschnitt an den Außenquerschnitt des Innengehäuses 2 mit den darin angeordneten Ferruleinzelgehäusen 3 angepassten, an seinen Stirnseiten 7, 8 offenen Rohrabschnitt 9. Vorzugsweise weisen das Innengehäuse 2 und das Steckeraußengehäuse 4 eine hohe Passgenauigkeit mit geringem Spiel auf, um eine hohe Passgenauigkeit der Ferrule des Steckers zu gewährleisten.

Zur Verriegelung des Innengehäuses 2 im Steckeraußengehäuse 4 weist dasselbe in seinen Schmalseiten 26 je Fenster 22 unter Belassung einer federnden Schwinge 23 auf, wie es der Figur 1 zu entnehmen ist. An der Schwinge 24 ist eine aus der Wandungsebene nach innen ragende Rastnase 24 angeordnet, was durch den die Rastnase 24 darstellenden punktierten Kreis in Figur 1 auf der Schwinge 23 angedeutet ist.

Die Ferruleinzelgehäuse 3 weisen zu ihrer Verriegelung je in einer ihrer Seitenflächen 27 ein Fenster 10 auf, welche mit den Rastnasen 24 der Schwinge 23 des Steckeraußengehäuses 4 korrespondieren.

Natürlich ist es denkbar, die Verriegelung derart zu gestalten, dass die Ferruleinzelgehäuse aus ihrer Seitenfläche heraus ragende bewegliche Rastnasen aufweisen, welche in Fensteraussparungen des Steckeraußengehäuses einrasten können, welche sich in den Schmalseiten des Steckeraußengehäuses befinden können.

An seiner dem Ferruleinzelgehäuse 3 abgewandten Stirnseite 11 weist das Innengehäuse 2 innerhalb der Wandung der Stirnseite 11 eine halbkreisförmige Ausnehmung 19 zur Durchführung einer Zugentlastung 13 für das (nicht gezeigte) Lichtleiterkabel auf. Die Zugentlastung 13 ist an das Lichtleiterkabel mit rundem Querschnitt und zwei im Kabelinneren geführten Lichtwellenleitern angepasst, welche in die Ferrule 14, 15 führen und dort gehaltert sind. Die Zugentlastung 13 kann als integraler Bestandteil des Innengehäuses 2, als Teil der Umhüllung des Lichtleiterkabels, oder als separates Bauteil ausgeführt sein.

Im Innengehäuse 2 befindet sich zwischen der Zugentlastung 13 und den Ferruleinzelgehäusen 3 ein Zwischenraum 16, der so bemessen ist, dass die Krümmung der Lichtwellenleiter bei einer Längsverschiebung der Ferrule 14, 15 mit Ferrulaufhängung 17, 17', 17" und Crimphülse innerhalb der Ferruleinzelgehäuse 3 einen minimal zulässigen Krümmungsradius nicht unterschreitet.

Zum Zusammenbau des Steckers 1 wird wie folgt vorgegangen: Zuerst wird das (nicht gezeigte) Lichtleiterkabel durch den Innenraum des Steckeraußengehäuses 4 gezogen und zwar entgegen der Richtung, wie es durch den Pfeil in Figur 1 angedeutet ist.

Anschließend werden die Ferruleinzelgehäuse 3 mit Ferrulaufhängung 17, 17', 17" und Crimphülse sowie die Zugentlastung 13 an dem Kabel befestigt und in das Innengehäuse 2 bzw. die Halbschale 6 gelegt, so dass Ferrulaufhängung 17, 17', 17" und die Zugentlastung 13 in die Ausnehmungen 20, 20' bzw. 12 der Halbschale 6 zu liegen kommen. Nunmehr wird das Innengehäuse 2 in das Innere des Steckeraußengehäuses 4 geschoben in der Richtung, wie es in Figur 1 gezeigt ist. Dabei laufen die beidseitigen Schrägflächen 25, 25' der Halbschale 6 an die Rastnasen 24 der Schwingen 23 des Steckeraußengehäuses 4 an und biegen bei weiterer Bewegung die Schwingen 23 nach oben. Das Einschieben des Innengehäuses 2 in das Steckeraußengehäuse 4 ist dann beendet, sobald die Rastnasen 24 der Schwingen 23 in den Aussparungen bzw. Fenstern 10 der Seitenflächen 27 der Ferruleinzelgehäuse 3 einrasten. Damit sind die Ferruleinzelgehäuse 3 sowie die Zugentlastung 13 gegen ein Herausfallen aus der an ihrer Längsseite 5 offenen Halbschale 6 gesichert. Dabei ist in dem das Steckeraußengehäuse 4 bildenden Rohrabschnitt 9 ein Anschlag 18 angeordnet, vorzugsweise in Form einer umlaufenden Stufe, der ein Hindurchschieben des Innengehäuses 2 durch das Steckeraußengehäuse 4 verhindert. Dadurch wird beim Einschieben des Innengehäuses 2 in das Steckeraußengehäuse 4 die Verschiebungsbewegung an der Stelle 18 bzw. dem Anschlag 18 angehalten bzw. der Verschiebeweg des Innengehäuses 2 begrenzt, sobald das Innengehäuse 2 vollständig in das Außengehäuse 4 eingeschoben ist und nur noch die Ferruleinzelgehäuse 3 aus dem Steckeraußengehäuse 4 herausragen. Dieser Anschlag ist durch die gestrichelte Linie 18 im Steckeraußengehäuse 4 in Figur 1 angedeutet.

Dabei ist denkbar, dass das Steckeraußengehäuse 4 eine geeignete Ausnehmung aufweist, durch die ein korrespondierend angeordnetes, vorzugsweise vorspringendes oder rückspringendes, Rastteil am Ferruleinzelgehäuse bzw. am Innengehäuse zur Verrastung nach vollständigem Einschieben des Innengehäuses in das Steckeraußengehäuse hinelnragt; Rastteil und Ausnehmung bilden somit ein Verriegelungsorgan. Eine solche Kombination aus Ausnehmung und Rastteil kann gleichzeitig zur Verriegelung des Steckeraußengehäuses 4 mit dem Innengehäuse 2 dienen.

Grundsätzlich können an dem Innengehäuse 2 und/oder an dem Steckeraußengehäuse 4 geeignete, vorzugsweise vorspringende oder rückspringende, Rastteile und mit den Rastteilen korrespondierende Rastfenster zur Verriegelung des Innengehäuses 2 mit dem Steckeraußengehäuse 4 angeordnet sein, welche Rastteile und korrespondierende Rastfenster Verrastungsorgane bilden. Derselbe Effekt kann erzielt werden, indem an den Ferruleinzelgehäusen 3 und/oder an dem Steckeraußengehäuse 4 geeignete, vorzugsweise vorspringende oder rückspringende, Rastteile und mit den Rastteilen korrespondierende Rastfenster zur Verriegelung der Ferruleinzelgehäuse 3 mit dem Steckeraußengehäuse 4 angeordnet sind, wobei durch die Verriegelung der Ferruleinzelgehäuse 3 mit dem Steckeraußengehäuse 4 auch das Innengehäuse 2 gegenüber dem Steckeraußengehäuse 4 fixiert wird.

Bei dem in Fig. 1 dargestellten Stecker 1 handelt es sich um eine Ausführung mit voneinander beabstandet im Innengehäuse 2 angeordneten Ferruleinzelgehäusen 3. Die Ferruleinzelgehäuse 3 weisen vorzugsweise einen rechteckigen Querschnitt auf.

In den Figuren 2 und 3 sind Ausführungsbeispiele von erfindungsgemäßen Steckern 1', 1" gezeigt, bei denen sich die in dem jeweiligen Innengehäuse 2', 2" angeordneten Ferruleinzelgehäuse 3', 3" mit einer Seitenfläche berühren. Die Ferruleinzelgehäuse 3, 3' und 3" weisen vorzugsweise einen identischen Querschnitt auf, welcher ebenso vorzugsweise rechteckig ist, wie in den Figuren 2 und 3 gezeigt ist. Die Ferruleinzelgehäuse 3', 3" können sich dabei entweder mit ihren flächenmäßig kleineren Schmalseiten, Figur 2, oder mit ihren flächenmäßig größeren Breitseiten, Figur 3, berühren. Indem die Ferruleinzelgehäuse 3', 3" einander berühren wird gegenüber dem Stand der Technik in höchst vorteilhafter Weise eine weitere Miniaturisierung einer mittels derartiger Stecker hergestellten Steckverbindung ermöglicht.

Vorzugsweise sind die Ferruleinzelgehäuse 3', 3" dabei rechteckig-quaderförmig ausgeführt, um durch Einsetzen der Ferruleinzelgehäuse 3', 3" in unterschiedlichen Positionen in unterschiedliche Innengehäuse 2', 2" mit einem möglichst geringen Aufwand zwei unterschiedliche, an unterschiedliche räumliche Einbaubedingungen angepasste Stecker 1', 1" herstellen zu können.

Hierdurch ist es möglich mit ein und denselben, baulich unveränderten Ferruleinzelgehäusen 3', 3" einen in den Figuren 1 und 2 dargestellten eher breiten und flachen Stecker 1', und einen in Fig. 3 dargestellten eher hohen und schmalen Stecker 1" herzustellen. Die Ferruleinzelgehäuse 3' des in den Figuren 1 und 2 dargestellten Steckers 1' sind gegenüber den Ferruleinzelgehäusen 3" des in Figur 3 dargestellten Steckers 1" um 90° um die Längsachse der Ferrulaufhängungen 17', 17" gedreht. Die Ferruleinzelgehäuse 3', 3" sind zur Erzeugung des rechteckigen Querschnitts vorzugsweise nicht in einer Richtung erhöht, sondern in der anderen Richtung verschmälert.

Die verbleibende Erhöhung in der einen Richtung ist dabei notwendig, um bei gleich bleibenden Abmessungen der Ferrule 14, 15 bzw. der Ferrulaufhängungen 17,17', 17" im Vergleich zu dem in Figur 1 dargestellten Ausführungsbeispiel eine Hintergreifung an den Ferruleinzelgehäusen 3', 3" anordnen zu können, welche mit entsprechenden Vorsprüngen an den Innengehäusen 2', 2" korrespondieren.

Die Verwendung rechteckig-quaderförmiger Ferruleinzelgehäuse 3', 3" erlaubt eine hohe Standardisierung der Bauteile des erfindungsgemäßen Steckers 1', 1" bei gleichzeitig sehr variabler Ausgestaltungsmöglichkeit der Stecker 1', 1". Um zwei an unterschiedliche räumliche Einbaubedingungen angepasste Stecker 1', 1" herzustellen sind nur zwei unterschiedliche Bauteile, die das Innengehäuse 2', 2" bildende Halbschale 6', 6" und der das Steckeraußengehäuse 4', 4" bildende Rohrabschnitt 9', 9" nötig. Alle anderen Teile können gleich bleiben. Dabei muss das Innengehäuse noch nicht einmal als vollständige Halbschale (bei Fehlen einer Stirnseite) ausgebildet sein, es ist durchaus denkbar, dass das Innengehäuse in manchen Bereichen nur eine Grundplatte oder rudimentäre Seitenwandungen umfasst.

In den Figuren 2 und 3 ist darüber hinaus sehr gut erkennbar, wie der Innenquerschnitt des das jeweilige Steckeraußengehäuse 4', 4" bildenden Rohrabschnitts 9', 9" an den jeweiligen Außenquerschnitt des jeweiligen Innengehäuses 2', 2" samt den jeweiligen Ferruleinzelgehäusen 3', 3" angepasst ist. Zur einfachen und kostengünstigen Herstellbarkeit des erfindungsgemäßen Steckers 1, 1', 1" ist das Innengehäuse 2, 2', 2" als ein Spritzgussteil ausgeführt, wobei sowohl das Innengehäuse als auch das Steckeraußengehäuse als ein stranggepresstes Teil oder als ein Spritzgussteil ausgeführt sein kann. Zur Verrastung mit einem Receptakle ist bei den in den Figuren 2 und 3 dargestellten Steckern 1', 1" möglich, Hintergreifungen an den aus den Innengehäusen 2', 2" ragenden Enden der Ferruleinzelgehäuse 3', 3" anzuordnen, in welche an dem jeweiligen Receptakle angeordnete Rastfedern in Verriegelungsstellung greifen.

### Gewerbliche Anwendbarkeit:

Die Erfindung ist insbesondere im Bereich der Herstellung von Steckern für Lichtwellenleiter sowie in der Herstellung von optischen Datenübertragungsstrecken gewerblich anwendbar. Die besondere Nützlichkeit der Erfindung besteht darin, dass mit derselben eine hohe Miniaturisierung bei geringen Herstellungskosten und trotzdem hoher Passgenauigkeit des Steckers zu erreichen ist, um somit die Übertragungsverluste bei der Signalübertragung bzw. die Dämpfung des Signals in den Steckern so gering wie möglich zu halten. Damit stellt die Erfindung einen Stecker für Lichtwellenleiter zur Verfügung, umfassend ein Steckeraußengehäuse, ein in dem Steckeraußengehäuse angeordnetes Innengehäuse, sowie in dem Innengehäuse angeordnete, jeweils ein mit einem Lichtwellenleiter verbundendes Ferrul mit Ferrulaufhängung aufnehmende und teilweise an einer Stirnseite des Steckers aus diesem herausragende Ferruleinzelgehäuse. Der Stecker ist gekennzeichnet durch ein die Ferruleinzelgehäuse von höchstens drei Seiten umschließendes, eine an einer Längsseite offene Halbschale umfassendes Innengehäuse, sowie ein im Wesentlichen einen in seinem Innenquerschnitt an den Außenquerschnitt des Innengehäuses mit den darin angeordneten Ferruleinzelgehäusen angepassten, an seinen Stirnseiten offenen Rohrabschnitt umfassendes Steckeraußengehäuse.

### Bezugszahlenliste:

- 1, 1', 1": Stecker
- 2, 2', 2": Innengehäuse
- 3, 3', 3": Ferruleinzelgehäuse
- 4, 4', 4": Steckeraußengehäuse
- 5: Längsseite
- 6, 6', 6": Halbschale
- 7: Stirnseite
- 8: Stirnseite
- 9, 9', 9": Rohrabschnitt
- 10: Aussparung bzw. Fenster
- 11: Stirnseite
- 12: Ausnehmung
- 13: Zugentlastung
- 14, 15: Ferrule
- 16: Zwischenraum
- 17, 17', 17": Ferrulaufhängungen mit Crimphülse
- 18: Anschlag
- 19: Durchführung
- 20, 20': Ausnehmungen
- 21: Stirnfläche
- 22: Fenster
- 23: Schwinge
- 24: Rastnase
- 25, 25': Schrägflächen
- 26: Seitenwandung des Steckeraußengehäuses
- 27: Seitenfläche des Ferruleinzelgehäuses

## Patentansprüche

1. Stecker (1, 1', 1") für Lichtwellenleiter, umfassend ein Steckeraußengehäuse (4, 4', 4"), ein in dem Steckeraußengehäuse (4, 4', 4") angeordnetes Innengehäuse (2, 2', 2"), sowie in dem Innengehäuse (2, 2', 2") angeordnete Ferruleinzelgehäuse (3, 3', 3"), welche jeweils ein mit einem Lichtwellenleiter verbundendes Ferrul (14, 15) haltern und welche teilweise an einer Stirnseite des Steckers (1, 1', 1") aus diesem herausragen, wobei die Ferrule (14, 15) mittels je einer Ferrulaufhängung (17, 17', 17") im Innengehäuse (2, 2', 2") gehaltert sind,
**dadurch gekennzeichnet, dass**
a) das Innengehäuse (2, 2', 2") als an einer Längsseite (5) wenigstens teilweise offene Halbschale (6, 6', 6") ausgebildet ist, welche die Ferruleinzelgehäuse (3, 3', 3") bzw. die Ferrulaufhängungen (17) von höchstens drei Seiten umschließt,
b) das Steckeraußengehäuse (4, 4', 4") bezüglich seines Innenquerschnitts an den Außenquerschnitt des Innengehäuses (2, 2', 2") angepasst ist und als Rohrabschnitt (9, 9', 9") ausgeführt ist, welcher an seinen Stirnseiten (7, 8) offen ist,
c) das Innengehäuses (2, 2', 2") ist in das Steckeraußengehäuse (4, 4', 4") zur Aufnahme innerhalb desselben einschiebbar.

2. Stecker nach Anspruch 1, **dadurch gekennzeichnet,**
**dass** das Innengehäuse (2, 2', 2") und/oder das Steckeraußengehäuse (4, 4', 4") einteilig ausgeführt ist.

3. Stecker nach Anspruch 1 oder 2, **gekennzeichnet durch**
an dem Innengehäuse (2, 2', 2") und/oder an dem Steckeraußengehäuse (4, 4', 4") angeordnete Mittel zur Verriegelung des Innengehäuses (2, 2', 2") mit dem Steckeraußengehäuse (4, 4', 4").

4. Stecker nach einem der Ansprüche 1 bis 3, **gekennzeichnet durch**
an den Ferruleinzelgehäusen (3, 3', 3") und/oder an dem Steckeraußengehäuse (4, 4', 4") angeordnete Mittel zur Verriegelung der Ferruleinzelgehäuse (3, 3', 3") mit dem Steckeraußengehäuse (4, 4', 4"), wobei **durch** die Verriegelung der Ferruleinzelgehäuse (3, 3', 3") mit dem Steckeraußengehäuse (4, 4', 4") das Innengehäuse (2, 2', 2") gegenüber dem Steckeraußengehäuse (4, 4', 4") gleichzeitig fixierbar ist.

5. Stecker nach Anspruch 3 oder 4, **dadurch gekennzeichnet,**
**dass** die Mittel zur Verriegelung mindestens ein vorstehendes Verriegelungsorgan, wie Rastnase (24) und mindestens ein mit dem Verriegelungsorgan korrespondierendes Rastfenster (10) umfassen.

6. Stecker nach Anspruch 3 oder 4 oder 5, **dadurch gekennzeichnet,**
**dass** die Mittel zur Verriegelung mindestens einen Anschlag (18) umfassen, welcher beim Einschieben des Innengehäuses (2, 2', 2") in das Steckeraußengehäuses (4, 4', 4") die Verschiebbarkeit des Innengehäuses (2, 2', 2") gegenüber dem Steckeraußengehäuse (4, 4', 4") beschränkt.

7. Stecker nach Anspruch 6, **dadurch gekennzeichnet,**
**dass** der Anschlag (18) durch eine lokale Verkleinerung des Innenquerschnitts des Steckeraußengehäuses (4, 4', 4") gebildet ist.

8. Stecker nach einem der vorherigen Ansprüche, **dadurch gekennzeichnet,**
**dass** die Ferrule (14, 15) mit ihrer Ferrulaufhängung (17, 17', 17") innerhalb der Ferruleinzelgehäuse (3, 3', 3") axial verschiebbar angeordnet sind.

9. Stecker nach einem der vorherigen Ansprüche, **gekennzeichnet durch**
eine in dem Innengehäuse (2, 2', 2") angeordnete Zugentlastung (13) für ein von einem von den Ferruleinzelgehäusen (3, 3', 3") abgewandten Kabeleinführende (11) des Steckers (1, 1', 1") in das Steckergehäuse (4, 4', 4") geführtes Lichtleiterkabel.

10. Stecker nach Anspruch 9, **dadurch gekennzeichnet,**
**dass** zwischen der Zugentlastung (13) und den Ferruleinzelgehäusen (3, 3', 3") ein Zwischenraum (16) innerhalb des Innengehäuses (2) angeordnet ist, in welchem das aus mehreren einzelnen Lichtwellenleitern bestehende Lichtleiterkabel in die einzelnen Lichtwellenleiter aufgespalten ist und in welchem die einzelnen Lichtwellenleiter nicht parallel verlaufen, wobei der Zwischenraum (16) so bemessen ist, dass die Krümmung der Lichtwellenleiter bei einer Längsverschiebung der Ferrule (17, 17', 17") innerhalb des Innengehäuses (2) einen minimal zulässigen Krümmungsradius nicht unterschreitet.

11. Stecker nach einem der vorherigen Ansprüche, **dadurch gekennzeichnet,**
**dass** die Ferruleinzelgehäuse (3', 3") einen rechteckigen Querschnitt aufweisen und in zwei um 90° um die Längsachse der Ferrule (14, 15) verdrehten Positionen, nämlich entweder mit einer ihrer schmalen Seitenfläche (Figur 2) oder einer ihrer breiten Seitenfläche (Figur 3), wahlweise je in zwei verschiedenen Innengehäusen (2', 2") anordbar sind, denen jeweils unterschiedliche Steckeraußengehäuse (4', 4") zugeordnet sind, so dass mit nur geringfügigem Aufwand zwei an unterschiedliche räumliche Einbaubedingungen angepasste Stecker (1', 1") herstellbar sind, einem eher breiten und flachen (1') Stecker (Figur 2), und einem eher hohen und schmalen Stecker (1") (Figur 3).

12. Stecker nach einem der vorherigen Ansprüche, **dadurch gekennzeichnet,**
**dass** die in das Innengehäuse (2', 2") eingesetzten Ferruleinzelgehäuse (3', 3") einander berühren.

13. Stecker nach einem der vorherigen Ansprüche, **dadurch gekennzeichnet,**
**dass** das Innengehäuse (2, 2', 2") und/oder das Steckeraußengehäuse (4, 4', 4") jeweils ein stranggepresstes Teil oder ein Spritzgussteil ist.

14. Stecker nach einem der vorherigen Ansprüche, **dadurch gekennzeichnet,**
**dass** die Seitenwandungen (5, 5') der Halbschale (6), von innerhalb des Zwischenraumes (16) der Halbschale (6) betrachtet, die Höhe des Ferruleinzelgehäuse (3, 3', 3") aufweisen.

15. Stecker nach einem der vorherigen Ansprüche, **dadurch gekennzeichnet,**
**dass** sich an die Seitenwandungen (5, 5') der Halbschale (6) in Richtung der die Durchführung (19) einer Zugentlastung (13) aufnehmenden Stirnseite (11) je eine Schrägfläche (25, 25') anschließt, welche in die Stirnseite (11) übergehen.

16. Stecker nach einem der vorherigen Ansprüche, **dadurch gekennzeichnet,**
**dass** die Ferruleinzelgehäuse (3) vollständig oder fast vollständig bzw. wenigstens teilweise aus der Stirnfläche (21) der Halbschale (6) hervorragen, wobei die Ferrulaufhängungen (17) von drei Seiten von der Halbschale (6) umschlossen sind.

17. Stecker nach einem der vorherigen Ansprüche, **dadurch gekennzeichnet,**
**dass** die Ferrule (3) die Halbschale (6) vollständig oder fast vollständig nach außen in axialer Richtung des Steckers (1) überragen, wobei die Ferruleinzelgehäuse (3) über die Ferrulaufhängungen (17) mit dem Innengehäuse (2) formschlüssig verbunden sind.

18. Stecker nach einem der vorherigen Ansprüche, **dadurch gekennzeichnet,**
**dass** sowohl das Innengehäuse (2) wie auch das Steckeraußengehäuse (4) einen rechteckförmigen Querschnitt aufweisen, wie Innengehäuse (2) und Steckeraußengehäuse (4) auch jeweils einen rechteckförmigen Grundriss besitzen.

19. Stecker nach Anspruch 18, **dadurch gekennzeichnet,**
**dass** das Steckeraußengehäuse (4) als hohler Quader mit ebenfalls bei allen Seiten gleicher Wandstärke ausgebildet ist.

20. Stecker nach einem der vorherigen Ansprüche, **dadurch gekennzeichnet,**
**dass** das Innengehäuse (2) und das Steckeraußengehäuse (4) eine hohe Passgenauigkeit mit geringem Spiel aufweisen, um eine hohe Passgenauigkeit der Ferrule des Steckers zu gewährleisten.
